# EUROPÄISCHE PATENTSCHRIFT

(11) **EP 2 756 217 B1**
(45) Veröffentlichungstag und Bekanntmachung des Hinweises auf die Patenterteilung: **24.07.2019**
(21) Anmeldenummer: 12769338.0
(22) Anmeldetag: 04.09.2012
(51) Int. Cl.: F16L 55/165, B29C 63/36, B29C 63/00, B29C 63/34, B29K 63/00

(54) **AUSKLEIDUNGSSCHLAUCH FÜR DIE SANIERUNG FLUIDFÜHRENDER LEITUNGSSYSTEME**
LINING TUBE FOR THE RESTORATION OF FLUID-CONDUCTING LINE SYSTEMS
GAINE DE CHEMISAGE POUR LA RÉNOVATION DE SYSTÈMES DE CANALISATIONS ACHEMINANT UN FLUIDE

(30) Priorität: 13.09.2011 DE 102011113264
(43) Veröffentlichungstag der Anmeldung: 23.07.2014
(73) Patentinhaber: AlzChem Trostberg GmbH, 83308 Trostberg (DE)
(72) Erfinder: KLINGER, Christian, 85439 Ampfing (DE)
(74) Vertreter: Dr. Langfinger & Partner
(86) Internationale Anmeldenummer: PCT/EP2012/067200
(87) Internationale Veröffentlichungsnummer: WO 2013/037670

(56) Entgegenhaltungen:
- EP-A1- 0 100 029
- EP-A1- 0 145 654
- EP-A1- 2 410 230
- WO-A1-92/20504
- WO-A1-98/51960
- WO-A2-93/15131
- US-B1- 6 485 834
- Michael S Lowry ET AL: "Cure evaluation of Intelimer latent curing agents for thermoset resin applications Presented at a meeting of the Thermoset Resin Formulators Association at the Hilton Suites Chicago Magnificent Mile in Chicago", , 16 September 2008 (2008-09-16), XP055398333, Retrieved from the Internet: URL:https://www.trfa.org/erc/docretrieval/ uploadedfiles/Technical Papers/2008 Meeting/Lowry-AirProducts_paper-Latent_Cur ing_agents.pdf [retrieved on 2017-08-11]

## Beschreibung

Die vorliegende Erfindung betrifft einen Auskleidungsschlauch zur Sanierung von fluidführenden Leitungssystemen.

Verfahren zur Sanierung von Leitungssystemen, in denen zum Beispiel flüssige oder gasförmige Medien transportiert werden, sind bekannt und im Stand der Technik vielfach beschrieben.

Zunächst sind hier Verfahren zu nennen, bei denen die einen Defekt oder eine Beschädigung aufweisenden Abschnitte des Leitungssystems durch neue Abschnitte ersetzt werden. Dies ist jedoch aufwendig und auch nicht immer möglich. So ist es beispielsweise bei unter Druck betriebenen Leitungssystemen in der Regel nicht zulässig, Abschnitte beliebig herauszutrennen und durch neue Abschnitte zu ersetzen, da dadurch die Druckfestigkeit gefährdet werden könnte. Daher muss in solchen Systemen oft ein deutlich größerer Abschnitt ersetzt werden als eigentlich wegen der Beschädigung erforderlich.

Bei unterirdisch verlegten Leitungssystemen müssen diese für diese Art der Sanierung erst aufwendig freigelegt und nach der Sanierung wieder entsprechend eingegraben werden. Insbesondere bei der Sanierung von Kanalsystemen unter Verkehrswegen bedeutet dies für einen erheblichen Zeitraum massive Störungen des Verkehrsflusses über lange Zeiträume und erhebliche Kosten.

Ein besonders elegantes, in der jüngeren Vergangenheit an Bedeutung gewinnendes Verfahren zur Sanierung von fluidführenden Leitungssystemen, z.B. Kanälen und ähnlichen Rohrsystemen besteht darin, dass man einen flexiblen, mit einem härtbaren Harz getränkten Faserschlauch, der als Auskleidungsschlauch (sog. Liner) dient, in das Leitungssystem einführt, dort aufweitet, so dass er sich eng an die Innenwand des Leitungssystems anschmiegt, und danach das Harz aushärtet.

Die Herstellung eines derartigen Auskleidungsschlauches ist beispielsweise in der WO 95/04646 beschrieben.

Als härtbare Harze werden nach den bekannten Verfahren vorzugsweise ungesättigte Polyesterharze oder Vinylesterharze verwendet, die beispielsweise in Styrol und/oder einem Acrylester gelöst sein können.

Diese ungesättigten Polyester- oder Vinylester können thermisch (üblicherweise durch Peroxidkatalysatoren) oder mittels Strahlung, z.B. durch UV-Licht mit Photoinitiatoren wie beispielsweise in der EP-A 23623 beschrieben, ausgehärtet werden. Auch so genannte Kombinationshärtungen mit einem für die thermische Härtung verwendeten Peroxidinitiator in Kombination mit Photoinitiatoren sind möglich und haben sich insbesondere bei großen Wandstärken der Auskleidungsschläuche als vorteilhaft erwiesen. Ein Verfahren für eine derartige sogenannte Kombinationshärtung ist beispielsweise in der EP-A 1262708 beschrieben. Ungesättigte Polyester- oder Vinylesterharze unterliegen jedoch bei der Härtung einem Schwund, was die Stabilität des sanierten Leitungssystems im späteren Betrieb beeinträchtigen kann.

Dieser Schwund kann dadurch reduziert werden, dass Verstärkungen wie Glasfasern oder dgl. in entsprechender Menge zugesetzt werden. Dies beeinträchtigt jedoch die Flexibilität der Auskleidungsschläuche, was insbesondere beim Sanieren von fluidführenden Leitungssystemen mit relativ geringem Innendurchmesser (wie z.B. Hausanschlussleitungen in Abwassersammelsystemen) nachteilig sein kann. In solche Leitungssysteme werden die Auskleidungsschläuche in der Regel durch Umstülpen (sogenannte Inversionsverfahren) eingebracht. Bei hohen Gehalten an Verstärkungsmitteln gestalten sich Inversionsverfahren jedoch zunehmend schwieriger. Gerade bei solchen Leitungssystemen ist es jedoch wichtig, dass zwischen dem eingebrachten Auskleidungsschlauch und der ursprünglichen Wandung der Leitungssysteme keine Hohlräume entstehen (wie diese bei einer Schwindung beim Aushärten entstehen können), da dies die Stabilität beeinträchtigt (die Druckbelastung auf die Wandungen des Systems in derartigen Systemen steigt bei gleichbleibendem Abwasservolumen mit sinkendem Durchmesser des Leitungssystems) und zudem der freie Rohrquerschnitt verringert wird, was ebenfalls unerwünscht ist. Auch Spannungsrisse können durch starken Schwund auftreten und damit die Stabilität beeinträchtigen.

Epoxidharze, die durch Polyaddition hergestellt werden, zeigen bei der Aushärtung ein deutlich besseres Schwindungsverhalten als ungesättigte Polyesterharze und wären von daher bei vorstehend beschriebenen Problemstellungen grundsätzlich vorteilhaft.

Aus der DE 201 21 554 ist ein Schlauchsystem zur Sanierung von Druckrohrleitungen bekannt, wobei das Schlauchsystem an die Innenwand der zu sanierenden Rohrleitung dichtend aufbringbar ist, wobei das Schlauchsystem mit einem Zweikomponenten-Epoxidharz getränkt ist. Das Harz muss wegen der geringen Verarbeitungszeit unmittelbar vor dem Einbringen in das Leitungssystem eingebracht werden.

Aus der EP 145 654 ist ein Verfahren zum Innenauskleiden von Rohren oder Rohrteilstücken bekannt, bei dem ein schlauchförmiges flexibles Laminat mit einer faserförmigen Schicht, die mit einem noch nicht ausgehärteten Bindemittel imprägniert ist, gegen die Rohrinnenoberfläche gepresst wird. Das Bindemittel enthält ein Salz aus einem oder mehreren Poly(aminen) mit mindestens einem tertiären Stickstoffatom und einem oder mehreren oder einem oder mehreren aromatischen Polyolen oder aliphatisch substituierten Phenolen sowie ein flüssiges Epoxidharz oder ein flüssiges Gemisch von Epoxidharzen.

Aus der WO 93/15131 sind Harzsysteme bekannt, die im Harz eingebettete inerte Materialien enthalten, die bei Umgebungsbedingungen stabil sind, aber bei Anwendung von Strahlung die Härtung des Harzsystems auslösen. Das Harzsystem kann mikroverkapselten Katalysatoren enthalten, deren Hülle oder Beschichtung das inerte Material darstellt. Die Hülle oder Beschichtung kann aus Gelatine bestehen. Die Harzsysteme können für Auskleidungsschläuche verwendet werden.

Aus M.S. Lowry et al., Cure evaluation of Intelimer latent curing agents for thermoset resin applications (präsentiert bei einer Tagung der Thermoset Resin Formulators Association im Hilton Suites Hotel Chicago am 16. September 2008) sind latente Härter bekannt, die in Auskleidungsschläuchen für Rohre verwendet werden können. Für Epoxidharze werden ausschließlich Härter mit Aktivierungstemperaturen von über 100°C beschrieben.

Epoxidharze sind nur während der sogenannten Topfzeit verarbeitbar - und diese ist bei Zweikomponentensystemen relativ kurz. Die beiden Komponenten werden daher in der Regel auf der Baustelle gemischt und dann in den Schlauch eingebracht. Dies bringt jedoch eine Reihe von Problemen mit sich.

Für eine gleichmäßige Aushärtung von durch Polyaddition härtenden Epoxidharzen kommt es wesentlich auf die Einhaltung einer exakten Stöchiometrie von Harz und Härter an. Ist diese nicht gegeben, ist die Aushärtung ungenügend (wenn zu wenig Härter eingesetzt wird) oder es kommt zu einer Versprödung (wenn der Härter im Überschuß eingesetzt wird.

Die gleichmäßige Einbringung des Harzes in den Auskleidungsschlauch auf der Baustelle stellt eine weitere Herausforderung dar. Der Auskleidungsschlauch wird in der Regel nicht am Einbauort hergestellt, sondern vorgefertigt zur Baustelle geliefert und dann in das zu sanierende fluidführende Leitungssystem eingebracht. Bei der Verwendung von ungesättigten Polyesterharzen zur Tränkung der Faserbänder, insbesondere nach dem z.B. in der WO 95/04646 beschriebenen Wickelverfahren, können die Polyesterharze bereits beim Wickelverfahren in die verwendeten Faserbänder eingebracht werden bzw. es können die zu wickelnden Faserbänder vor dem Wickelvorgang mit dem Harz getränkt werden. Dies ermöglicht eine bessere Kontrolle der homogenen und gleichmäßigen Verteilung des Harzes, die für die spätere Aushärtung wichtig ist. Daher ist es vorteilhaft, das auszuhärtende Harz bereits bei der Herstellung des Auskleidungschlauchs einzubringen und den harzgetränkten Auskleidungsschlauch zur Baustelle zu verbringen und dort einzubauen. Bei Zweikomponenten-Epoxidharzen ist dies praktisch nicht möglich, da deren Topfzeit hierfür viel zu kurz ist und der Auskleidungsschlauch vor Eintreffen an der Baustelle vorzeitig härten würde und damit nicht mehr in das zu sanierende Leitungssystem eingebracht werden könnte.

Schließlich ist stets das Risiko vorhanden, dass es nach der Einbringung des Harzes zu unvorhergesehenen Verzögerungen beim Einbau des Auskleidungsschlauchs und zu einer Überschreitung der Topfzeit kommt, bevor der Auskleidungsschlauch an die gewünschte Stelle gebracht ist. Im Ergebnis muss dann der Auskleidungsschlauch aufwendig wieder aus dem Leitungssystem entfernt werden, was aufgrund der durch die Härtung eingetretenen Vernetzung nur unter Zerstörung des Auskleidungsschlauchs mit entsprechendem Aufwand und Kosten möglich ist.

Die vorstehend geschilderten Probleme haben bislang verhindert, dass Zweikomponenten-Epoxidharze in großem Umfang in Auskleidungsschläuchen für die Sanierung fluidführender Systeme zum Einsatz kommen.

Grundsätzlich können Epoxide durch Polyaddition oder katalytisch gehärtet werden. Die kationische Härtung von Epoxidharzen ist bekannt und in der Literatur beschrieben. Insbesondere im Bereich der dentalen Applikationsmassen finden solche Systeme Verwendung, die unter Verwendung von Photoinitiatoren, die ein Oniumsalz und einen Sensibilisator enthalten, gehärtet werden. Nur beispielsweise sei hier auf die EP 789 721 und die EP 1 252 551 verwiesen.

Allerdings ist die bei der Härtung eintretende Schwindung solcher Systeme in der Regel höher als bei den durch Polyaddition aushärtenden Epoxidharzen.

Aus der US 5,017,258 ist ein Verfahren zur Innenauskleidung von Rohrleitungen bekannt, bei welchem ein Substrat, welches ein Einkomponenten-Epoxidharz und einen Härter auf der Basis von in 1-Position unsubstituierten Imidazolen enthält, in eine Leitung eingebracht und anschließend kationisch gehärtet wird. Imidazol-basierende Härter können mangels des Vorhandenseins zweier aktiver Wasserstoffatome im Molekül nicht durch Polyaddition härten. Die Topfzeit der beschriebenen Systeme bei 25°C liegt im Bereich von weniger als 24 h, d.h. eine Einbringung des Harzes bereits bei der Herstellung eines Auskleidungsschlauchs und vor dem Verbringen desselben an den Einsatzort ist mit den beschriebenen Systemen nicht möglich, da eine vorzeitige Aushärtung eintreten würde.

Aus der DE 20 2009 015 035 ist eine Vorrichtung zum Sanieren und Abdichtngen von Leitungen bekannt, wobei die zu sanierende Leitung mit einer Auskleidung versehen wird, wobei diese Auskleidung einen Kleber umfasst, der zum Verkleben von Auskleidung und Innenwand der Leitung dient. Als Kleber kann ein Kleber auf Epoxidharzbasis verwendet werden, wobei auch Einkomponentenkleber genannt werden. Weder zur konkreten Zusammensetzung des Klebers noch zum Aufbau der Auskleidung oder der Stabilität/Latenz oder den Härtungsparamtern werden nähere Angaben gemacht.

Einkomponenten-Epoxidharze unterscheiden sich von Zweikomponentensystemen grundsätzlich dadurch, dass alle zur Aushärtung erforderlichen Komponenten enthalten sind. Eine Mischung zweier Komponenten mit den damit verbundenen Problemen ist nicht erforderlich. Die Aushärtung erfolgt durch Aktivierung des Härters, der in "latenter" Form vorliegt. Allerdings erfordern latente Härter oft Temperaturen zur Aushärtung, die oberhalb von 150°C, in vielen Fällen sogar oberhalb von 200°C liegen. Bei derartigen Temperaturen sind die in den Auskleidungsschläuchen üblicherweise enthaltenen Polymerfolien nur noch sehr begrenzt stabil. Zudem erfordert das Aufheizen eines Auskleidungsschlauchs mit einem Durchmesser wie er insbesondere in Abwassersystemen vorkommt, erhebliche Mengen an thermischer Energie, was wirtschaftlich von Nachteil ist.

Der vorliegenden Erfindung lag daher die Aufgabe zugrunde, vorkonfektionierte Auskleidungsschläuche zur Sanierung fluidführender Leitungssysteme zur Verfügung zu stellen, die zum einen einfach herstellbar und in das Leitungssystem einbringbar sind, ohne dass es an der Baustelle erforderlich wird, Komponenten in die Auskleidungsschläuche zu inkorporieren (z.B. Harze oder Harzbestandteile) und die andererseits nach Einbau in das zu sanierende Leitungssystem eine gute Dimensionsstabilität zeigen.

Diese Aufgabe wird erfindungsgemäß durch die Auskleidungsschläuche gemäß Anspruch 1 gelöst.

Bevorzugte Ausführungsformen der Erfindung sind den Unteransprüchen sowie der nachfolgenden detaillierten Beschreibung zu entnehmen.

Die erfindungsgemäßen vorkonfektionierten Auskleidungsschläuche enthalten mindestens ein harzgetränktes Faserband, welches mit einem Einkomponenten-Epoxidharz getränkt ist, welches durch Polyaddition härtet.

Unter vorkonfektioniert im Sinne der Erfindung sollen solche Auskleidungsschläuche verstanden werden, bei denen die Tränkung der Faserbänder bereits bei der Herstellung der Auskleidungsschläuche erfolgt und die harzgetränkten Auskleidungsschläuche vom Ort der Herstellung zum Einbauort transportiert und dort ohne weitere Zugabe von Komponenten in die zu sanierenden Leitungssysteme eingebracht werden.

Um dies zu erreichen sollten die in den erfindungsgemäßen Auskleidungsschläuchen enthaltenen Einkomponenten-Epoxidharze bei einer Temperatur von 20 °C über einen Zeitraum von mindestens 48 h, vorzugsweise von mindestens 100 h und insbesondere von mindestens 30 Tagen verarbeitbar bleiben, d.h. eine entsprechend lange Lagerstabilität aufweisen. Unter Lagerstabilität soll dabei im Zusammenhang mit der vorliegenden Erfindung allgemein der Zeitraum verstanden werden, innerhalb dessen sich bei einer Temperatur von 10 °C die Ausgangsviskosität des Epoxidharzes verdoppelt. Die Kontrolle der Viskositätszunahme bei Lagerung ist von Bedeutung, da nur bis zu einer gewissen maximalen Viskosität der Auskleidungsschlauch problemlos in das zu sanierende Leitungssystem eingebracht und an der Wandung zur Anlage gebracht werden kann, ohne dass Beschädigungen des Auskleidungsschlauches zu befürchten sind oder eine passgenaue Anlage an die Wandung nicht mehr möglich ist, weil der Auskleidungsschlauch nicht mehr ausreichend flexibel ist.

Unter fluidführenden Leitungssystemen im Sinne der vorliegenden Erfindung sollen Leitungssysteme jeglicher Art zum Transport von flüssigen oder gasförmigen Medien verstanden werden, die bei Unterdruck, Normaldruck oder Überdruck betrieben werden können. Beispielhaft seien hier Pipelines jeglicher Art, Rohrleitungssysteme zum Transport von Medien in chemischen Betrieben und Produktionsanlagen, Druckleitungen wie Druckwasserrohre und Trinkwasserrohre und insbesondere auch Abwassersysteme genannt, die unterirdisch bzw. nicht sichtbar verlegt sind. Die erfindungsgemäßen Auskleidungsschläuche eignen sich insbesondere vorteilhaft für die Sanierung von Wasser- oder Abwasserleitungen in Kanalsystemen. Besonders geeignet sind die erfindungsgemäßen Auskleidungsschläuche für die Sanierung von Abzweigleitungen (z.B. Hausanschlüssen oder dgl.) in Kanalsystemen, die einen geringeren Innendurchmesser aufweisen als die Hauptleitungen und bei denen der Einbau durch Inversion erfolgt, weil ein Durchziehen des Auskleidungsschlauchs durch das zu sanierende Leitungssystem nicht realisiert werden kann.

Die erfindungsgemäßen Auskleidungsschläuche weisen eines oder mehrere Faserbänder auf, die mit einem Einkomponenten-Epoxidharz getränkt sind, welches einen Härter enthält, der durch Polyaddition härtet.

Die Härtung durch Polyaddition setzt voraus, dass Harz und Härter in vorzugsweise stöchiometrisch korrektem Verhältnis eingesetzt werden. Ein zu hoher stöchiometrischer Überschuss an Epoxidgruppen im zu vernetzenden Harz oder ein Überschuss von durch den Härter gelieferten aktiven Wasserstoffatomen führt zu einer Beeinträchtigung der Härtungsgeschwindigkeit und des erreichbaren Aushärtungsgrades. Geringe Überschüsse einer dieser beiden Komponenten können zur gezielten Steuerung von Härtungsgeschwidndigkeit und Endviskosität nach Härtung genutzt werden. Erfindungsgemäß liegt das stöchiometrische Verhältnis der aktiven Gruppen im Härter zu den aktiven Gruppen im zu härtenden Harz im Bereich von 0,9: 1 bis 1,1:1, besonders bevorzugt im Bereich von 0,95:1 bis 1,05:1.Damit es zur Härtung kommt, muss zudem der Härter mindestens zwei reaktionsfähige Zentren (in der Regel aktive Wasserstoffatome) enthalten, durch die zwei Epoxidharzmoleküle unter Polyaddition miteinander verknüpft werden können. Die Polyaddition verläuft im Unterschied zu anderen Polymerisationsverfahren ohne Freisetzung niedermolekularer Stoffe, was sich vorteilhaft auf die Produkteigenschaften auswirkt.

Als Härter für Epoxidharzsysteme, die durch Polyadddition aushärten sind insbesondere Aminverbindungen oder Säureanhydride zu nennen, die mindestens zwei aktive Wasserstoffatome aufweisen.

Eine erste Gruppe geeigneter Aminverbindungen mit mindestens zwei freien Amingruppen sind Alkyldiamine, Arlydiamine, Alkylpolyamine, Arylpolyamine und Polyetheramine. Beispiele hierfür sind Ethylendiamin, Diethylentriamin, Triethylentetramin, Xylylendiamine, Methylendianilin, Ispohorondiamin, p-Aminocyclohexylmethan oder Polyetheramine. Weiterhin sind geeignet substituierte oder unsubstituierte Guanidine (wie Methylguanidin, Dimethylguanidin , Timethylguanidin oder Tetramethylguanidin, Hexamethylisobiguanidin und insbesondere Cyanoguanidin, welches auch als Dicyandiamid bezeichnet wird), substituierte Harnstoffe, Melaminharze und Guanamin-Derivate,

Stellvertretend für die Gruppe der Säureanhydride seien hier nur substituierte oder unsubstituierte Anhydride der Phthalsäure genannt. Säureanhydride reagieren bei den zur Härtung angewandten Temperaturen nur langsam mit den Epoxidharzen, weshalb sie im allgemeinen in Kombination mit Beschleunigern eingesetzt werden. Der einleitende Schritt der Härtung ist in solchen Systemen die Bildung eines Salzes mit einer Betainstruktur, dessen Carboxylatanion mit einer Epoxidgruppe reagieren kann, was zur Bildung eines Alkoholats führt, welches wiederum mit einem Anhydridmolekül unter Bildung eines Carboxylatmoleküls reagieren kann, womit die gewünschte zur Vernetzung und Härtung führende Kettenreaktion entsteht.

Grundsätzlich werden die durch Polyaddition härtenden Verbindungen in sogenannte Kalthärter und latente Härter eingeteilt. Kalthärter reagieren bereits bei niedrigen Temperaturen und führen damit zu einer unerwünschten vorzeitigen Aushärtung, wenn nicht entsprechende Schutzmaßnahmen ergriffen werden.

Erfindungsgemäß enthält das Epoxidharz einen Härter mit einer Aktivierungstemperatur von 60°C oder darunter. Unter Aktivierungstemperatur soll hierbei die Temperatur verstanden werden, bei der der Härter im Einkomponenten-Epoxidharz zu reagieren beginnt (gemessen mittels DSC bei einer Aufheiztemperatur von 10°C/min), was leicht durch die Viskositätszunahme gemessen werden kann.

Die Hhärter werden in den Auskleidungsschläuchen gemäß der vorliegenden Erfindung in maskierter Form eingesetzt. Unter Maskierung ist dabei zu verstehen, dass der Härter gegenüber dem zu härtenden Epoxidharz bei niedrigen Temperaturen so isoliert ist, dass eine vorzeitige Aushärtung verhindert wird. Bei Erhitzen auf die angestrebte Härtungstemperatur wird die Isolierung von Harz und Härter aufgehoben und es kommt zur Aushärtung.

. Erreicht wird die Isolierung von Harz und Härter, durch Verkapseln oder Umhüllen des Härters mit einem Wachs oder einem Polymeren mit einem Schmelzpunkt, der unter der Härtungstemperatur im Bereich von 60 bis 120°C liegt. Bevorzugt weist das zur Umhüllung verwendete Material einen Schmelzpunkt auf, der 1 bis 30, vorzugsweise 2 bis 20°C unter der Härtungstemperatur liegt. Auf diese Weise können auch Härter verwendet werden, die bei den Lager- und Transporttemperaturen der Auskleidungsschläuche flüssig sind und daher ohne schützende Umhüllung zu einer vorzeitigen Aushärtung führen würden.

Der Fachmann wird, nachdem er die Härtungstemperatur unter Berücksichtigung der individuellen Randbedingungen festgelegt hat, ein geeignetes Wachs oder ein anderes zur Umhüllung geeignetes Material mit einem Schmelzpunkt vorzugsweise in der Nähe, insbesondere 1-30°, besonders bevorzugt 2-20° unterhalb der Härtungstemperatur auswählen.

Verfahren zur Umhüllung von Feststoffen oder flüssigen Komponenten (manche der Kalthärter sind bei Raumtemperatur flüssig) mit einer schmelzbaren Hülle sind dem Fachmann an sich bekannt und in der Literatur beschrieben, so dass sich hier detaillierte Angaben erübrigen. Hier seien nur beispielhaft das Auftrommeln, diverse Sprühverfahren, Bedampfungsverfahren oder auch Abscheidungsverfahren sowie Mikroverkapselungsverfahren genannt. Der Fachmann unterliegt bei der Wahl des Verfahrens zur Umhüllung der Kalthärter an sich keiner besonderen Beschränkung.

Aus der Aktivierungstemperatur eines Härters kann der Fachmann erkennen, ob es einerseits einer Maskierung bedarf, um eine vorzeitige Aushärtung zu verhindern und wird entsprechend seine Auswahl treffen.

Die Aushärtungstemperaturen, d.h. die Temperaturen bei denen das Epoxidharz im Auskleidungschlauch gehärtet werden kann, liegen bei der vorzugsweise angewandten Aushärtung mit heißem Wasser oder Dampf vorzugsweise bei mindestens 60 °C, insbesondere bevorzugt im Bereich von etwa 70 bis etwa 120°C. Grundsätzlich kann die zur Aushärtung benötigte Energie jedoch auf beliebige Weise eingebracht werden, so z.B. durch IR-Strahlung oder andere bekannte Methoden.

Im Hinblick auf die eingesetzten Epoxidharze unterliegen die erfindungsgemäßen Auskleidungsschläuche keiner besonderen Beschränkung. Somit kommen prinzipiell alle in einer großen Vielzahl kommerziell erhältlichen Epoxidharze in Betracht, die üblicherweise mehr als eine 1,2-Epoxidgruppe (auch als Oxirangruppe bezeichnet) aufweisen und gesättigt oder ungesättigt, aliphatisch, cycloaliphatisch, aromatisch oder heterocyclisch sein können.

Derartige Harze sind erhältlich aus Epoxidverbindungen mit durchschnittlich mehr als einer Epoxidgruppe pro Molekül, ggf. unter Mitverwendung von Hydroxylgruppen enthaltenden weiteren Monomeren.

Geeignete Epoxide sind beispielsweise Cyclohexenoxidgruppen enthaltende Verbindungen wie z-B. Epoxycyclohexancarboxylate, wie sie im Detail in der US A 3,117,099 beschrieben sind, auf die hier wegen Einzelheiten verwiesen wird.

Eine weitere bevorzugte Gruppe von Epoxiden sind Glycidyletherderivate, wie sie beispielsweise durch Umsetzung von Phenolderivaten mit mehreren Hydroxylgruppen mit Epichlorhydrin erhältlich sind. Zu diesen zählen insbesondere die Diglycidylether von 2,2-Dimethyl-2,2-di-(4-hydroxyphenyl)-propan (Bisphenol A) bzw. 2,2-Di(4-hydroxyphenyl)-methan (Bisphenol F) oder 4,4'-Dihydroxydiphenylsulfon (Bisphenol S). Auch aliphatische Epoxidverbindungen sind geeignet, z.B. epoxidierte Fettsäurederivate.

Konkret seien beispielhaft genannt Octadecylenoxid, Styroloxid, Cyclohexenoxid, Vinylcyclohexenoxid, Limonendioxid, 1,omega-Bis(3,4,-epoxycyclohexylmethyloxy)alkane, Glycidol, Glycidylmethacrylat, Vinylcyclohexendioxid, 3,4-Epoxy-6-methylcyclohexylmethyl-3,4-epoxy-6-methyl-cyclohexencarboxylat, 3,4-Epoxycyclohexylmethyl-3,4-epoxycyclohexencarboxylat, Bis-(3,4-epoxy-6-methylcyclohexylmethyl)adipat, Bis-(3,4-epoxy-4-methylcyclohexancarbonsäure)hexyldiester, 1,3-Bis(3,4-epoxycyclohexylethyl)tetramethyldisiloxan und Bis-(2,3-epoxycyclopentyl)ether, die teilweise nachfolgend dargestellt sind:

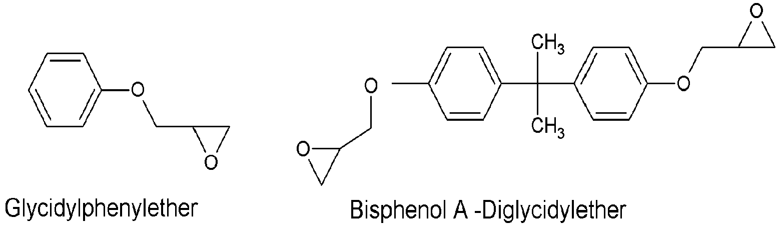

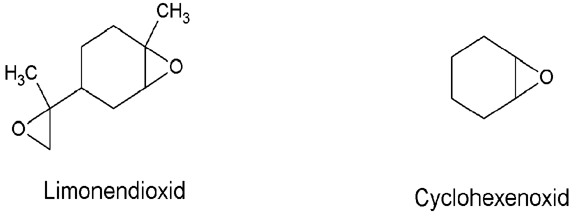

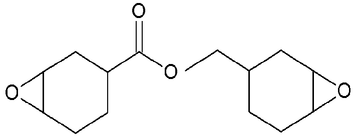

### 3,4-Epoxycyclohexancarbonsäure-(3',4'-epoxycyclohexyl)methylester

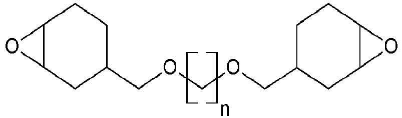

### 1-omega-Bis(3,4-epoxycyclohexylmethyloxy)alkan

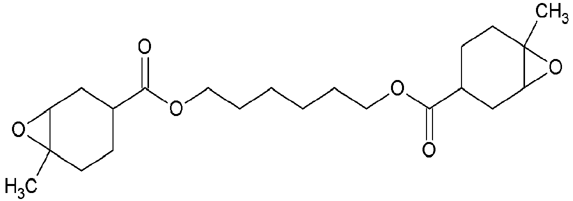

### 1,6-Bis-(3,4-epoxy-4-methylcyclohexancarbonsäure)hexyldiester

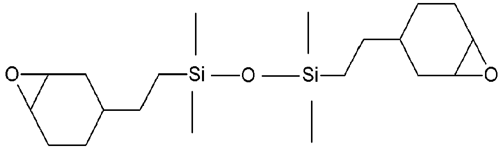

### 1,3-Bis-(3,4-epoxycyclohexylethyl)tetramethyldisiloxan

Weiterhin seien erwähnt Epoxidharze vom Phenol-Novolak-Typ, Epoxidharze vom Cresol-Novolak-Typ, epoxidierte Produkte von Dicyclopentadien-modifizierten Phenolharzen, aromatische Epoxidhazre wie Epoxidharze mit Naphthalin-Grundgerüst und Epoxidharze mit Fluoren-Grundgerüst, epoxidierte Produkte von 2,2',6,6'-Tetramethylbisphenol, aliphatische Epoxidharze wie Neopentylglykoldiglycidylether und 1,6-Hexandioldiglycidylether. Schließlich sind auch Epoxidharze mit einem Heteroring zu erwähnen wie z.B. Triyglycidylcyanurat. Entsprechende Produkte sind in einer Vielzahl von unterschiedlichen Varianten in der Literatur beschrieben und im Handel erhältlich.

Um die Eigenschaften der Epoxidharze gezielt auf die gewünschte Anwendung einstellen zu können, hat es sich bewährt, Epoxidverbindungen mit mehr als einer Epoxidgruppe im Molekül mit Verbindungen mit mehr als einer Hydroxygruppe im Molekül in Kombination einzusetzen. Diese Mischungen ergeben besser ausgehärtete Produkte, da es zu Kettenübertragungsreaktionen kommt.

Besonders bevorzugte Vertreter von Verbindungen mit mehr als einer Hydroxygruppe im Molekül sind aliphatische Alkylenglykole und Polyoxyalkylenglykole. Weitere Beispiele geeigneter Hydroxyverbindungen sind der WO 96/13538 zu entnehmen, auf die hier diesbezüglich verwiesen wird.

Falls Kombinationen von Epoxiden mit mehr als einer Epoxidgruppe im Molekül mit Verbindungen mit mehr als einer Hydroxygruppe im Molekül eingesetzt werden, liegt das Äquivalentverhältnis von Epoxidgruppen zu Hydroxygruppen im allgemeinen im Bereich von 0,1 zu 10 bis 10 zu 0.1, vorzugsweise von 0,5 zu 5 bis 5 zu 0,5 und insbesondere von 0,7 zu 1 bis 1 zu 0,7, wobei ganz besonders bevorzugt Mischungen sind, bei denen das Äquivalentverhältnis im Bereich von 0,9 zu 1 bis 1,1 zu 1 liegt. Ein geringer Überschuss von Hydroxygruppen hat sich als besonders vorteilhaft erwiesen.

Statt einer Mischung zweier unterschiedlicher Verbindungen können auch Verbindungen eingesetzt werden, die neben Epoxidgruppen noch Hydroxygruppen im gleichen Molekül enthalten. Entsprechende Verbindungen sind dem Fachmann bekannt, so dass sich hier nähere An gaben erübrigen.

Das Epoxidharz in den erfindungsgemäßen Auskleidungsschläuchen kann zur Verbesserung der mechanischen Eigenschaften des ausgehärteten Liners Füllstoffe enthalten, z.B. Glasmehl, Aluminiumoxidhydrat oder Siliciumdioxid.

Gegebenenfalls können den Epoxidharzen zur Herabsetzung der Viskosität reaktive Verdünner wie z.B. Butandiolglycidylether, oder Monoglycidylether höherer Alkohole, Butylglycidiylether, 2,2,4-Trimethylpentylglycidylether, Phenylglycidylether, Kresylglycidylether oder Glycidylester, um nur einige Beispiele zu nennen, zugesetzt werden. Dem Fachmann sind entsprechende geeignete Verbindungen bekannt und diese sind kommerziell erhältlich.

Das Mengenverhältnis von Härter zu Epoxidharz wird , falls eine weitgehend vollständige Aushärtung gewünscht ist, so gewählt, dass aktive Wasserstoffatome im Härter und Epoxidgruppen im Epoxidharz in äquimolarer Menge vorhanden sind. Durch eine Variation des Mengenverhältnisses von Harz und Härter können die Eigenschaften des ausgehärteten Harzes in gewissem Umfang beeinflusst werden; in der Regel ist es jedoch bevorzugt, wenn die molaren Mengen von Epoxidgruppen im Harz und aktiven Wasserstoffatomen im Härter nicht mehr als 20, vorzugsweise nicht mehr als 10 und besonders bevorzugt nicht mehr als 5% voneinander abweichen.

Die erfindungsgemäßen Auskleidungsschläuche enthalten mindestens ein mit einem Einkomponenten-Epoxidharz getränktes Faserband. Als Faserbänder eignen sich dabei grundsätzlich alle dem Fachmann bekannten Produkte in Form von Geweben, Gewirken, Gelegen, Matten oder Vliesen, die Fasern in Form von langen Endlosfasern oder kurzen Fasern enthalten können. Entsprechende Produkte sind dem Fachmann an sich bekannt und in großer Vielfalt von verschiedenen Herstellern kommerziell erhältlich.

Unter Geweben werden dabei im allgemeinen flächenförmige Textilerzeugnisse aus mindestens zwei rechtwinklig gekreuzten Fasersystemen verstanden, wobei die so genannte Kette in Längsrichtung und der so genannte Schuß senkrecht dazu verlaufen.

Unter Gewirken werden im allgemeinen Textilerzeugnisse verstanden, die durch Maschenbildung erzeugt werden.

Fasergelege sind eine Verarbeitungsvariante von Fasern, bei denen die Fasern nicht verwoben werden, sondern parallel zueinander ausgerichtet in eine chemische Trägersubstanz (die Matrix) eingebettet sind und im Regelfall durch Deckfolien von oben und unten fixiert werden. Fasergelege weisen durch die parallele Ausrichtung der Fasern eine ausgeprägte Anisotropie der Festigkeiten Orientierungsrichtung und senkrecht dazu auf, was für manche Anwendungen von Interesse sein kann.

Ein Vlies besteht aus lose zusammen liegenden Fasern, welche noch nicht miteinander verbunden sind. Die Festigkeit eines Vlieses beruht nur auf der fasereigenen Haftung, kann aber durch Aufarbeitung beeinflusst werden. Damit man das Vlies verarbeiten und benutzen kann, wird es in der Regel verfestigt, wofür verschiedene Methoden angewandt werden können.

Vliese sind verschieden von Geweben, oder Gewirken, die sich durch vom Herstellverfahren bestimmte Legung der einzelnen Fasern oder Fäden auszeichnen. Vliese bestehen dagegen aus Fasern, deren Lage sich nur mit den Methoden der Statistik beschreiben lässt. Die Fasern liegen wirr im Vliesstoff zueinander. Die englische Bezeichnung *nonwoven* (nicht gewebt) grenzt sie dementsprechend eindeutig von Geweben ab. Vliesstoffe werden unter anderem nach dem Fasermaterial (z. B. das Polymer bei Chemiefasern), dem Bindungsverfahren, der Faserart (Stapel- oder Endlosfasern), der Faserfeinheit und der Faserorientierung unterschieden. Die Fasern können dabei definiert in einer Vorzugsrichtung abgelegt werden oder gänzlich stochastisch orientiert sein wie beim Wirrlagen-Vliesstoff.

Wenn die Fasern keine Vorzugsrichtung in ihrer Ausrichtung (Orientierung) haben, spricht man von einem isotropen Vlies. Sind die Fasern in einer Richtung häufiger angeordnet als in der anderen Richtung, dann spricht man von Anisotropie.

Im Rahmen der vorliegenden Erfindung sollen als Faserbänder im Sinne der Erfindung auch Filze verstanden werden. Ein Filz ist ein Flächengebilde aus einem ungeordneten, nur schwer zu trennendem Fasergut. Prinzipiell sind Filze damit nicht gewebte Textilien. Aus Chemiefasern und Pflanzenfasern werden Filze in der Regel durch trockene Vernadelung (sog. Nadelfilze) oder durch Verfestigung mit unter hohem Druck aus einem Düsenbalken austretenden Wasserstrahlen hergestellt. Die einzelnen Fasern im Filz sind ungeordnet miteinander verschlungen.

Nadelfilz wird mechanisch in der Regel mit zahlreichen Nadeln mit Widerhaken hergestellt, wobei die Widerhaken umgekehrt wie bei einer Harpune angeordnet sind. Dadurch werden die Fasern in den Filz gedrückt und die Nadel geht leicht wieder heraus. Durch wiederholtes Einstechen werden die Fasern miteinander verschlungen und anschließend eventuell chemisch oder mit Wasserdampf nachbehandelt.

Filze lassen sich - wie Vliese - aus praktisch allen natürlichen oder synthetischen Fasern herstellen. Neben der Vernadelung oder in Ergänzung ist auch das Verhaken der Fasern mit einem gepulsten Wasserstrahl oder mit einem Bindemittel möglich. Die letztgenannten Verfahren eignen sich insbesondere für Fasern ohne Schuppenstruktur wie Polyester- oder Polyamidfasern.

Filze weisen eine gute Temperaturbeständigkeit auf und sind in der Regel feuchtigkeitsabweisend, was bei der Anwendung in flüssigkeitsführenden systemen von Vorteil sein kann.

Die Länge der verwendeten Fasern unterliegt an sich keiner besonderen Beschränkung, d.h. es können sowohl so genannte Langfasern als auch Kurzfasern oder Faserbruchstücke verwendet werden. Über die Länge der verwendeten Fasern lassen sich die Eigenschaften der entsprechenden Faserbänder auch über weite Bereiche einstellen und steuern.

Auch die Art der verwendeten Fasern unterliegt keiner Beschränkung. Nur beispielhaft seien hier Glasfasern, Carbonfasern oder Kunststofffasern wie Aramidfasern oder Fasern aus thermoplastischen Kunststoffen wie Polyestern oder Polyamiden oder Polyolefinen (z.B. Polypropylen) genannt, die dem Fachmann mit ihren Eigenschaften bekannt und in großer Vielzahl kommerziell erhältlich sind. Aus wirtschaftlichen Gründen werden in der Regel Glasfasern bevorzugt; ist jedoch beispielsweise eine besondere Hitzebeständigkeit von Bedeutung, können beispielsweise Aramidfasern oder Carbonfasern eingesetzt werden, die hinsichtlich der Festigkeit bei höheren Temperaturen Vorteile gegenüber Glasfasern bieten können.

Die erfindungsgemäßen Auskleidungsschläuche können eines oder mehrere Faserbänder enthalten, die zudem gleich oder unterschiedlich sein können.

So kann ein erstes Faserband vorteilhaft ausgewählt sein aus Geweben, Gewirken, Gelegen, Matten, Filzen oder Vliesen, wobei die Länge der Fasern entsprechend der gewünschten Anwendung gewählt werden kann. Gemäß einer bevorzugten Ausführungsform ist ein erstes harzgetränktes Faserband ein Fasergelege aus parallel ausgerichteten Endlosfasern, vorzugsweise parallel ausgerichteten Endlos-Glasfasern. Vorteilhaft sind die Endlosfasern im Wesentlichen senkrecht zur Längsrichtung des Faserbandes ausgerichtet. Mit diesem ersten Faserband kann vorzugsweise ein zweites Faserband kombiniert werden, in dem die Fasern in einer Wirrfasermatte ungerichtet angeordnet sind. Das erste Faserband verleiht dem Auskleidungsschlauch eine sehr gute Festigkeit in Längsrichtung, was beim Einbau in die zu sanierenden Leitungssysteme von Vorteil ist. Das daraus angeordnete Faserband mit ungerichteten Fasern in Form einer Wirrfasermatte stabilisiert durch die hohe Harzaufnahme die innere Oberfläche und vermeidet Poren an der inneren Oberfläche, die bei längerem Kontakt mit aggressiven Medien zu Schäden führen könnten. Durch die Verwendung des gerichteten Fasergeleges wird andererseits das Risiko, dass die Fasermatte bei der Tränkung auseinander gezogen wird und es damit zu einer ungleichmäßigen Tränkung kommt, reduziert.

Alternativ kann in einem ersten Faserband ein Fasergelege mit einer Wirrfasermatte vernadelt oder vernäht sein, d.h. das Faserband oder die Faserbänder können auch mehrschichtig aufgebaut sein. In diesem Fall bildet die Wirrfasermatte im fertigen Auskleidungsschlauch vorzugsweise die innere Oberfläche. Als vorteilhaft hat sich in einigen Fällen herausgestellt, wenn mindestens eines der auf ein erstes Faserband aufgebrachten weiteren Faserbänder mehrschichtig dergestalt aufgebaut ist, dass zwischen zwei Schichten mit ungerichteten Fasern eine Zwischenschicht mit parallel zur Längsrichtung des Faserbandes angeordneten Schnittfasern enthalten sind, die vorzugsweise eine Länge im Bereich von 2 bis 60, vorzugsweise von 3 bis 30 cm aufweisen.

Weitere geeignete Kombinationen mehrerer Faserbänder sind in der WO 2011/006618 beschrieben, auf die an dieser Stelle vollinhaltlich Bezug genommen wird. Auch die WO 2003/038331 beschreibt Faserbänder bzw. Endlosstoffe mit geeignetem Aufbau.

Zweckmäßigerweise kann der erfindungsgemäße Auskleidungsschlauch auf einer oder auf beiden Seiten des Faserbandes oder der Faserbänder zum Schutz gegen Verkleben oder Beschädigung mit einer Kunststofffolie (Schutzfolie) versehen sein. Entsprechende Folien sind dem Fachmann an sich bekannt und in der Literatur beschrieben, so dass sich hier nähere Ausführungen erübrigen.

Dabei wird mit "innerer" bzw. "äußerer" Schutzfolie die relative Lage nach Einbringen in das zu sanierende Leitungssystem bezeichnet. Beim Einbringen des Auskleidungsschlauches in das zu sanierende Leitungssystem nach dem sogenannten Inversionsverfahren wird die ursprünglich äußere Schutzfolie zur inneren Schutzfolie, da der Schlauch umgestülpt wird.

Mit den vorkonfektionierten Auskleidungsschläuchen gemäß der vorliegenden Erfindung wird eine ausreichende Topfzeit einerseits und eine Aushärtung bei akzeptablen Temperaturen andererseits erreicht.

Das Epoxidharz kann nach bekannten Methoden z.B. auf ein faserförmiges Trägermaterial aufgetragen oder dieses wird mit dem Harz getränkt, beispielsweise indem man ein Faserband durch ein Harzbad zieht, das Harz aufrakelt, einwalkt oder mit Hilfe von Unterdruck beaufschlagt. Nach dem Tränken hat es sich in manchen Fällen als vorteilhaft erwiesen, die Viskosität des Harzes nach dem Aufbringen auf das Faserband zu erhöhen, z.B. durch Eindicken, wie es in der WO 2006/061129 beschrieben ist. Dies kann auch durch den Zusatz geeigneter Additive oder Füllstoffe erreicht werden. Damit kann besser verhindert werden, dass das noch flüssige Harz aus dem getränkten Faserband herausläuft.

Nach einem geeigneten Verfahren werden die erfindungsgemäßen Auskleidungsschläuche durch ein Wickelverfahren hergestellt, wie es z.B. in der WO 95/04646 beschrieben ist.Die Breite der Faserbänder unterliegt dabei an sich keinen besonderen Beschränkungen; für eine Vielzahl von Anwendungen haben sich jedoch Faserbänder mit einer Breite von 20 bis 150, vorzugsweise von 30 bis 100 und insbesondere von 40 bis 80 cm als geeignet erwiesen.

Statt Faserbändern, die gewickelt werden, können in den erfindungsgemäßen Auskleidungsschläuchen auch vorgefertigte Faserstrukturen eingesetzt werden, die bereits eine schlauchförmige Form aufweisen und mit dem Einkomponenten-Epoxidharz getränkt werden. Entsprechende verfahren zur Tränkung sind dem Fachmann bekannt und in der Literatur beschrieben.

Die Dicke der Faserbänder in den erfindungsgemäßen Auskleidungsschläuchen unterliegt ebenfalls keiner besonderen Beschränkung und wird durch die Dicke des Auskleidungsschlauchs für die gewünschte Anwendung bestimmt. Dicken der Faserbänder im Bereich von 0,01 bis 10, insbesondere 0,05 bis 5 mm haben sich in der Praxis bewährt.

Nach der Imprägnierung kann das harzgetränkte Faserband im Fall der Anwendung eines Wickelverfahrens zu einem Faserschlauch geformt werden , beispielsweise nach dem in der WO 95/04646 beschriebenen Wickelverfahren, ggf. zusammen mit einer inneren und einer äußeren Schutzfolie sowie gegebenenfalls einem dünnen Faservlies. Alternativ ist es auch möglich, einen vorgefertigten Faserschlauch mit dem Epoxidharz zu tränken

Ein Auskleidungsschlauch mit einem besonders bevorzugten Aufbau ist in der WO 2011/006618 beschrieben, auf die hier in diesem Zusammenhang vollinhaltlich Bezug genommen wird.

Das Einführen des Auskleidungsschlauchs in einen zu sanierenden Abschnitt des Leitungssystems kann direkt, z.B. mit Hilfe einer Winde erfolgen oder indem man einen inversierten Liner mittels Druckluft oder durch Einpressen von Wasser in das Rohr einstülpt. Dies ist insbesondere dann zweckmäßig, wenn - wie bei einer bevorzugten Ausführungsform der Erfindung - Hausanschluss- oder Seitenkanäle, die von einem Hauptkanal abgehen, saniert werden sollen, wie es z. B in der US-A 6,227,764 beschrieben ist. Wegen des in der Regel geringeren Durchmessers dieser Systeme und der häufig vorhandenen Umlenkungen sind Einzugsverfahren dort häufig mit Schwierigkeiten verbunden und Inversierverfahren bringen Vorteile mit sich. Inversierverfahren sind dem Fachmann bekannt und in der Literatur beschreiben, so dass sich hier weitere Angaben erübrigen.

Vorzugsweise können die erfindungsgemäßen Auskleidungsschläuche bei der Anwendung von Inversierverfahren zur Sanierung von Abzweigleitungen oben offen sein und an ihrem unteren Ende einen an die Innenwand der Hauptleitung anlegbaren Kragen in Form eines sogenannten Hutprofils aufweisen. Im Innern dieses sogenannten Hutprofils kann dann ein aufweitbarer Träger vorgesehen sein, der bei Aufweitung bewirkt, dass sich das Hutprofil dicht an die Innenwand der Abzweigleitung anschmiegt.

Der Liner wird anschließend zum Beispiel durch Druckluft aufgeweitet, so dass er sich an die Innenwand des zu sanierenden Rohrs dicht anschmiegt.

Die erfindungsgemäßen Auskleidungsschläuche eignen sich zur Sanierung von Leitungssystemen jeglicher Art. Beispielhaft seien hier verschiedenste Arten von Kanal- und sonstigen Abwassersystemen sowie Rohrleitungssysteme in industriellen Produktionsanlagen genannt. Die erfindungsgemäßen Auskleidungsschläuche ermöglichen die Sanierung von Leitungssystemen ohne dass das Leitungssystem selbst freigelegt werden muss, was insbesondere bei schwierig zugänglichen Leitungen eine erhebliche Erleichterung und Kosteneinsparung mit sich bringt, da beispielsweise aufwendige Erdarbeiten weitgehend entfallen. Dies ist insbesondere bei der Sanierung von Kanalsystemen in Städten von Vorteil, weil die grabenlose Sanierung auch den laufenden Verkehr wesentlich weniger beeinträchtigt als die traditionelle Sanierung.

## Patentansprüche

1. Vorkonfektionierter Auskleidungsschlauch für die Sanierung fluidführender Systeme enthaltend mindestens ein harzgetränktes Faserband, wobei als Harz zur Tränkung des Faserbandes ein durch Polyaddition härtendes Einkomponenten-Epoxidharz enthalten ist, **dadurch gekennzeichnet, dass** der Härter im Epoxidharz in isolierter Form vorliegt, wobei das Epoxidharz einen Härter mit einer Aktivierungstemperatur von 60°C oder weniger enthält und die Isolierung des Härters in einer Umhüllung oder Verkapselung des Härters mit einem Material mit einem Schmelzpunkt unterhalb der Aushärtungstemperatur im Bereich von 60-120°C besteht und wobei das stöchiometrische Verhältnis der aktiven Gruppen im Härter zu den aktiven Gruppen im zu härtenden Harz im Bereich von 0,9:1 bis 1,1:1 liegt.

2. Auskleidungsschlauch nach Anspruch 1, **dadurch gekennzeichnet, dass** das Epoxidharz bei 20°C über einen Zeitraum von mindestens 48 h verarbeitbar ist.

3. Auskleidungsschlauch nach mindestens einem der Ansprüche 1 bis 2, **dadurch gekennzeichnet, dass** das Epoxidharz aus Epoxidverbindungen mit mehr als einer Epoxidgruppe im Molekül hergestellt ist.

4. Auskleidungsschlauch nach mindestens einem der Ansprüche 1 bis 3, **dadurch gekennzeichnet, dass** als weitere Komponente des Epoxidharzes eine aliphatische Hydroxyverbindung mit mehr als einer Hydroxygruppe im Molekül enthalten ist.

5. Auskleidungsschlauch nach mindestens einem der Ansprüche 1 bis 4, **dadurch gekennzeichnet, dass** der Härter einen Schmelzpunkt von mindestens 50°C aufweist.

6. Auskleidungsschlauch nach mindestens einem der Ansprüche 1 bis 5, **dadurch gekennzeichnet, dass** neben Epoxidkomponente und Härter noch ein Beschleuniger enthalten ist.

7. Auskleidungsschlauch nach mindestens einem der Ansprüche 1 bis 5, **dadurch gekennzeichnet, dass** das Epoxidharz bei einer Temperatur im Bereich von 70 bis 120°C gehärtet werden kann.

## Claims

1. Ready-made liner hose for the renovation of fluid-conducting systems containing at least one resin-impregnated fibre tape, wherein as the resin for impregnation of the fibre tape a polyaddition-curable one-component epoxy resin is present, **characterized in that** the curing agent is present in the epoxy resin in isolated form, wherein the epoxy resin contains a curing agent having an activation temperature of 60°C or less and the isolation of the curing agent is by means of a sheathing or encapsulation of the curing agent with a material having a melting point below the curing temperature in the range from 60-120°C and wherein the stoichiometric ratio of the active groups in the curing agent to the active groups in the curable resin is in the range from 0.9:1 to 1.1:1.

2. Liner hose according to Claim 1, **characterized in that** at 20°C the epoxy resin is workable over a period of at least 48 h.

3. Liner hose according to at least one of Claims 1 and 2, **characterized in that** the epoxy resin is produced from epoxy compounds having more than one epoxy group in the molecule.

4. Liner hose according to at least one of Claims 1 to 3, **characterized in that** as a further component of the epoxy resin an aliphatic hydroxyl compound having more than one hydroxyl group in the molecule is present.

5. Liner hose according to at least one of Claims 1 to 4, **characterized in that** the curing agent has a melting point of at least 50°C.

6. Liner hose according to at least one of Claims 1 to 5, **characterized in that** in addition to the epoxy compound and the curing agent an accelerant is also present.

7. Liner hose according to at least one of Claims 1 to 5, **characterized in that** the epoxy resin is curable at a temperature in the range from 70°C to 120°C.

## Revendications

1. Gaine de chemisage préfabriquée pour la rénovation de systèmes acheminant des fluides, contenant au moins une bande fibreuse imprégnée par une résine, une résine époxyde monocomposante durcissant par polyaddition étant contenue en tant que résine pour l'imprégnation de la bande fibreuse, **caractérisée en ce que** l'agent de durcissement dans la résine époxyde se présente sous forme isolée, la résine époxyde contenant un agent de durcissement ayant une température d'activation de 60°C ou moins, et l'isolement de l'agent de durcissement consistant en un enveloppement ou une encapsulation de l'agent de durcissement avec un matériau ayant un point de fusion inférieur à la température de durcissement dans la plage allant de 60 à 120°C, et le rapport stoechiométrique entre les groupes actifs dans l'agent de durcissement et les groupes actifs dans la résine à durcir se situant dans la plage allant de 0,9:1 à 1,1:1.

2. Gaine de chemisage selon la revendication 1, **caractérisée en ce que** la résine époxyde est usinable à 20°C pendant une durée d'au moins 48h.

3. Gaine de chemisage selon au moins l'une quelconque des revendications 1 à 2, **caractérisée en ce que** la résine époxyde est fabriquée à partir de composés époxyde contenant plus d'un groupe époxyde par molécule.

4. Gaine de chemisage selon au moins l'une quelconque des revendications 1 à 3, **caractérisée en ce qu'**un composé hydroxy aliphatique contenant plus d'un groupe hydroxy par molécule est contenu en tant que composant supplémentaire de la résine époxyde.

5. Gaine de chemisage selon au moins l'une quelconque des revendications 1 à 4, **caractérisée en ce que** l'agent de durcissement présente un point de fusion d'au moins 50°C.

6. Gaine de chemisage selon au moins l'une quelconque des revendications 1 à 5, **caractérisée en ce qu'**un accélérateur est encore contenu en plus du composant époxyde et de l'agent de durcissement.

7. Gaine de chemisage selon au moins l'une quelconque des revendications 1 à 5, **caractérisée en ce que** la résine époxyde peut être durcie à une température dans la plage allant de 70 à 120°C.
